(19) Europäisches Patentamt
European Patent Office
Office européen des brevets

(11) **EP 4 746 417 A1**

(12) **EUROPEAN PATENT APPLICATION**

(43) Date of publication:
**20.05.2026 Bulletin 2026/21**

(21) Application number: **24306911.9**

(22) Date of filing: **15.11.2024**

(51) International Patent Classification (IPC):
***H04N 21/218*** (2011.01)

(52) Cooperative Patent Classification (CPC):
**H04N 21/21805; G02B 27/0093; G06F 3/011;
H04N 19/00;** H04N 13/117

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **GUEDE, Celine
35510 CESSON-SEVIGNE (FR)**
• **LEROY, Bertrand
35170 BRUZ (FR)**
• **GENDROT, Remy
35760 MONTGERMONT (FR)**

(74) Representative: **Vossius & Partner
Patentanwälte Rechtsanwälte mbB
Siebertstraße 3
81675 München (DE)**

(54) **MIV DISPLACEMENT AS PER THE CONTENT**

(57) Some embodiments of a method may include obtaining a bitstream of immersive video content captured by a combination of at least a first camera and a second camera; obtaining a first set of camera parameters corresponding to the first camera; obtaining a second set of camera parameters corresponding to the second camera; adapting one or more displacement sensitivity parameters associated with the immersive video content based on the first and second set of camera parameters; and rendering the immersive video content using the adapted one or more displacement sensitivity parameters.

FIG. 4

**Description**

**BACKGROUND**

The present application is related to the technical fields of visual volumetric video-based coding (V3C), MPEG immersive video (MIV), muli-view + depth (MVD), multi-plane image (MPI), immersive content, and user experience enhancement.

**SUMMARY**

An example method in accordance with some embodiments may include: obtaining a bitstream of immersive video content captured by a combination of at least a first camera and a second camera; obtaining a first set of camera parameters corresponding to the first camera; obtaining a second set of camera parameters corresponding to the second camera; adapting one or more displacement sensitivity parameters associated with the immersive video content based on the first and second set of camera parameters; and rendering the immersive video content using the adapted one or more displacement sensitivity parameters.

For some embodiments of the example method, the first and second set of camera parameters include one or more parameters associated with motion.

Some embodiments of the example method may further include detecting a user interface action indicating a movement to be exhibited in rendering of the content, wherein adapting one or more displacement sensitivity parameters is further performed based on the detected user interface action.

Some embodiments of the example method may further include detecting a movement of a user relative to content rendered in an immersive environment, wherein adapting one or more displacement sensitivity parameters is further performed based on the detected movement of the user.

Some embodiments of the example method may further include: detecting a second movement of a user relative to content rendered in an immersive environment; and adapting at least one of the one or more displacement sensitivity parameters based on the detected second movement of the user.

For some embodiments of the example method, adapting the one or more displacement sensitivity parameters is performed based on the immersive video content.

For some embodiments of the example method, adapting the one or more displacement sensitivity parameters is performed based on a shape of an object present in the immersive video content.

Some embodiments of the example method may further include obtaining a second bitstream of a second immersive video content, wherein adapting one or more displacement sensitivity parameters is further performed based on the second immersive video content, and wherein the second immersive video content is different than the immersive video content obtained first.

For some embodiments of the example method, adapting one or more displacement sensitivity parameters associated with the immersive video content is based on distance between the first and second cameras.

For some embodiments of the example method, adapting one or more displacement sensitivity parameters associated with the immersive video content is based on distance between the first camera and an object captured in the immersive video content.

For some embodiments of the example method, adapting one or more displacement sensitivity parameters associated with the immersive video content includes adapting one or more displacement sensitivity parameters associated with the immersive video content for an object captured in the immersive video content when a distance between the object and the first camera is within a threshold range.

For some embodiments of the example method, adapting one or more displacement sensitivity parameters associated with the immersive video content includes setting each of the one or more displacement sensitivity parameters to a harmonic mean of the respective one or more displacement sensitivity parameters.

For some embodiments of the example method, adapting one or more displacement sensitivity parameters associated with the immersive video content includes: obtaining, for each of the one or more displacement sensitivity parameters, a respective global value to be used for more than one coordinate axis; and setting each of the one or more displacement sensitivity parameters to the respective global value.

For some embodiments of the example method, obtaining the first set of camera parameters includes receiving a first set of one or more supplemental enhancement information (SEI) messages, and obtaining the second set of camera parameters includes receiving a second set of one or more supplemental enhancement information (SEI) messages.

An example apparatus in accordance with some embodiments may include: a processor; and a memory storing instructions operative, when executed by the processor, to cause the apparatus to perform the method of any one of the methods listed above.

## BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1 is a system diagram illustrating an example set of interfaces for a system according to some embodiments.

FIG. 2 is a system diagram illustrating an example V3C immersive platform architecture according to some embodiments.

FIG. 3 is a system hierarchy diagram illustrating an example MIV bitstream map in V3C according to some embodiments.

FIG. 4 is a schematic illustration showing an example camera rig bounding volume versus 6DoF MIV viewing space according to some embodiments.

FIG. 5 is a schematic illustration showing an example cuboid representation according to some embodiments.

FIG. 6 is a graph illustrating an example adaptative sensitivity according to position according to some embodiments.

FIG. 7 is a flowchart illustrating an example adaptive sensitivity process according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "in at least one embodiment, ...." For brevity and clarity of presentation, this implied leading clause is not repeated *ad nauseum* in the detailed description.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

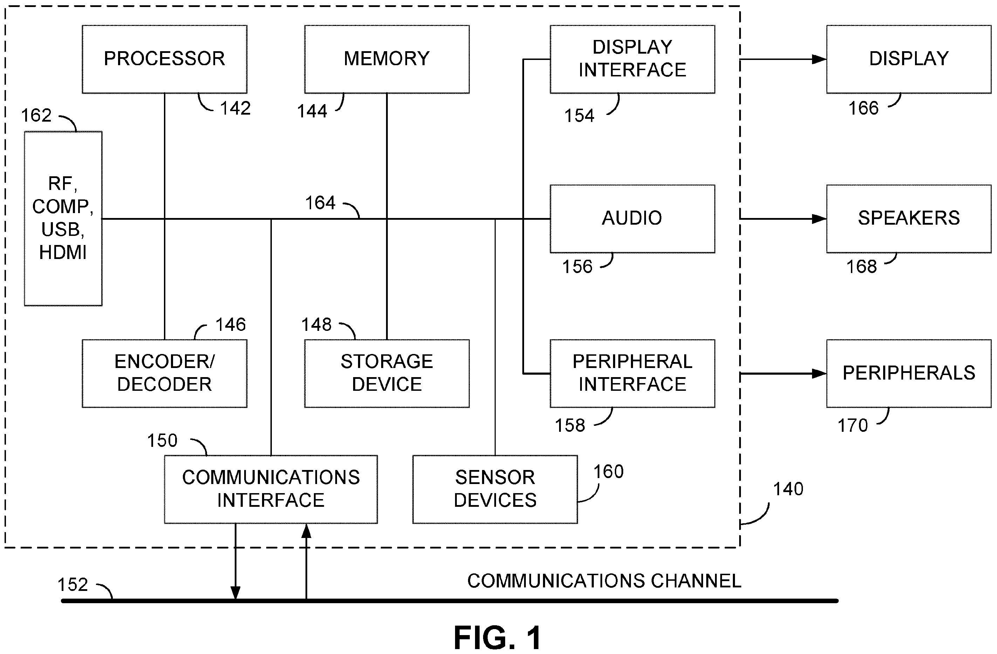

FIG. 1 is a system diagram illustrating an example set of interfaces for a system according to some embodiments. An extended reality display device, together with its control electronics, may be implemented using a system such as the system of FIG. 1. System 140 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 140, singly or in combination, can be embodied in a single integrated circuit (IC), multiple ICs, and/or discrete components. For example, in at least one embodiment, the processing and encoder/decoder elements of system 140 are distributed across multiple ICs and/or discrete components. In various embodiments, the system 140 is communicatively coupled to one or more other systems, or other electronic devices, via, for example, a communications bus or through dedicated input and/or output ports. In various embodiments, the system 140 is configured to implement one or more of the aspects described in this document.

The system 140 includes at least one processor 142 configured to execute instructions loaded therein for implementing, for example, the various aspects described in this document. Processor 142 may include embedded memory, input output interface, and various other circuitries as known in the art. The system 140 includes at least one memory 144 (e.g., a volatile memory device, and/or a non-volatile memory device). System 140 may include a storage device 148, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 148 can include an internal storage device, an attached storage device (including detachable and non-detachable storage devices), and/or a network accessible storage device, as non-limiting examples.

System 140 includes an encoder/decoder module 146 configured, for example, to process data to provide an encoded video or decoded video, and the encoder/decoder module 146 can include its own processor and memory. The encoder/decoder module 146 represents module(s) that can be included in a device to perform the encoding and/or decoding functions. As is known, a device can include one or both of the encoding and decoding modules. Additionally, encoder/decoder module 146 can be implemented as a separate element of system 140 or can be incorporated within processor 142 as a combination of hardware and software as known to those skilled in the art.

Program code to be loaded onto processor 142 or encoder/decoder 146 to perform the various aspects described in this document can be stored in storage device 148 and subsequently loaded onto memory 144 for execution by processor 142. In accordance with various embodiments, one or more of processor 142, memory 144, storage device 148, and encoder/decoder module 146 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 142 and/or the encoder/decoder module 146 is used to store instructions and to provide working memory for processing that is needed during encoding or decoding. In other embodiments, however, a memory external to the processing device (for example, the processing device can be either the processor 142 or the encoder/decoder module 142) is used for one or more of these functions. The external memory can be the memory 144 and/or the storage device 148, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 140 can be provided through various input devices as indicated in block 162. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1, include composite video.

In various embodiments, the input devices of block 162 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 140 to other electronic devices across USB and/or HDMI connections. It is to be understood that various aspects of input processing, for example, Reed-Solomon error correction, can be implemented, for example, within a separate input processing IC or within processor 142 as necessary. Similarly, aspects of USB or HDMI interface processing can be implemented within separate interface ICs or within processor 142 as necessary. The demodulated, error corrected, and demultiplexed stream is provided to various processing elements, including, for example, processor 142, and encoder/decoder 146 operating in combination with the memory and storage elements to process the datastream as necessary for presentation on an output device.

Various elements of system 140 can be provided within an integrated housing, Within the integrated housing, the various elements can be interconnected and transmit data therebetween using suitable connection arrangement 164, for example, an internal bus as known in the art, including the Inter-IC (I2C) bus, wiring, and printed circuit boards.

The system 140 includes communication interface 150 that enables communication with other devices via communication channel 152. The communication interface 150 can include, but is not limited to, a transceiver configured to transmit and to receive data over communication channel 152. The communication interface 150 can include, but is not limited to, a modem or network card and the communication channel 152 can be implemented, for example, within a wired and/or a wireless medium.

Data is streamed, or otherwise provided, to the system 140, in various embodiments, using a wireless network such as a Wi-Fi network, for example IEEE 802.11 (IEEE refers to the Institute of Electrical and Electronics Engineers). The Wi-Fi signal of these embodiments is received over the communications channel 152 and the communications interface 150 which are adapted for Wi-Fi communications. The communications channel 152 of these embodiments is typically connected to an access point or router that provides access to external networks including the Internet for allowing streaming applications and other over-the-top communications. Other embodiments provide streamed data to the system 140 using a set-top box that delivers the data over the HDMI connection of the input block 162. Still other embodiments provide streamed data to the system 140 using the RF connection of the input block 162. As indicated above, various embodiments provide data in a non-streaming manner. Additionally, various embodiments use wireless networks other than Wi-Fi, for example a cellular network or a Bluetooth network.

The system 140 can provide an output signal to various output devices, including a display 166, speakers 168, and other peripheral devices 170. The display 166 of various embodiments includes one or more of, for example, a touchscreen display, an organic light-emitting diode (OLED) display, a curved display, and/or a foldable display. The display 166 can be for a television, a tablet, a laptop, a cell phone (mobile phone), or other device. The display 166 can also be integrated with other components (for example, as in a smart phone), or separate (for example, an external monitor for a laptop). The other peripheral devices 170 include, in various examples of embodiments, one or more of a stand-alone digital video disc (or digital versatile disc) (DVR, for both terms), a disk player, a stereo system, and/or a lighting system. Various embodiments use one or more peripheral devices 170 that provide a function based on the output of the system 140. For example, a disk player performs the function of playing the output of the system 140.

In various embodiments, control signals are communicated between the system 140 and the display 166, speakers 168, or other peripheral devices 170 using signaling such as AV.Link, Consumer Electronics Control (CEC), or other communications protocols that enable device-to-device control with or without user intervention. The output devices can be communicatively coupled to system 140 via dedicated connections through respective interfaces 154, 156, and 158. Alternatively, the output devices can be connected to system 140 using the communications channel 152 via the communications interface 150. The display 166 and speakers 168 can be integrated in a single unit with the other components of system 140 in an electronic device such as, for example, a television. In various embodiments, the display interface 154 includes a display driver, such as, for example, a timing controller (T Con) chip.

The display 166 and speaker 168 can alternatively be separate from one or more of the other components, for example, if the RF portion of input 162 is part of a separate set-top box. In various embodiments in which the display 166 and speakers 168 are external components, the output signal can be provided via dedicated output connections, including, for example, HDMI ports, USB ports, or COMP outputs.

The system 140 may include one or more sensor devices 160. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 140 is used as the control module for an extended reality display (such as control modules), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 142 or by hardware, or by a combination of hardware and software. As a non-limiting example, the embodiments can be implemented by one or more integrated circuits. The memory 144 can be of any type appropriate to the technical environment and can be implemented using any appropriate data storage technology, such as optical memory devices, magnetic memory devices, semiconductor-based memory devices, fixed memory, and removable memory, as non-limiting examples. The processor 142 can be of any type appropriate to the technical environment, and can encompass one or more of microprocessors, general purpose computers, special purpose computers, and processors based on a multi-core architecture, as non-limiting examples.

A User Equipment (UE) may correspond to any extended Reality (XR) device/node which may come in variety of form factors. Typical UE (e.g., XR UE) may include, but not limited to the following: Head Mounted Displays (HMD), optical see-through glasses and video see-through HMDs for Augmented Reality (AR) and Mixed Reality (MR), mobile devices with positional tracking and camera, wearables etc. In addition to the above, several different types of XR UE may be envisioned based on XR device functions for e.g., as display, camera, sensors, sensor processing, wireless connectivity, XR/Media processing, and power supply, to be provided by one or more devices, wearables, actuators, controllers and/or accessories. One or more device/nodes/UEs may be grouped into a collaborative XR group for supporting any of XR applications/experience/services.

This application describes adapting displacement sensitivity using a V3C bitstream dedicated for MPEG immersive video (MIV) information (or MIV technology) to create a more intuitive and immersive environment for the user, to enhance their overall experience, and to allow the user to engage more deeply with the content.

For some embodiments, this application may be detected by observing a movement sensitivity adaptation for different MIV streams within an immersive scene, or by modifying the parameters contained in the MIV streams for global sensitivity computations.

V3C stands for Volumetric Video-based Coding, the standard for volumetric video in MPEG. According to *WD3.0 for the 3rd Edition of V3C*, MPEG-I WG 07 MPEG 3D Graphics Coding and Haptics Coding, MPEG 142-Antalya, MDS22755_WG07_N00592 (2023) (*"MDS22755_WG07_N00592"*), V3C currently handles two formats: point cloud compression (PCC) and MPEG Immersive Video (MIV), which includes multi-view + depth (MVD), multi-place images (MPI), and multi-sphere images (MSI). MSI is an extension of MPI for 360 degrees. MPEG plans to integrate mesh as the next format.

MPEG discovered that despite the apparent differences between point clouds and multi-view plus depth data, they may be transmitted similarly. This similarity lies in using 2D video codecs with additional metadata to reconstruct the data into a 3D space.

The mission of the Video Solutions Group is to develop a platform that demonstrates the full implementation of new codec standards like V3C in immersive use cases. This platform aims to raise awareness of new standards, support their adoption in applicative standards (SBTVD, 3GPP), and facilitate market adoption of emerging standards.

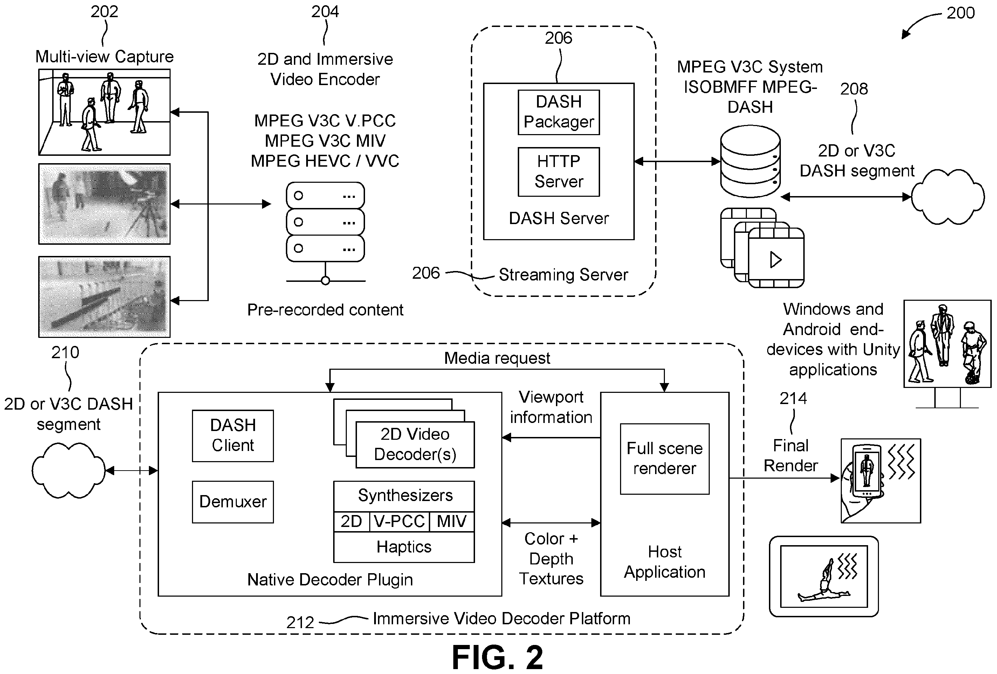

FIG. 2 is a system diagram illustrating an example V3C immersive platform architecture according to some embodiments. FIG. 2 shows the global architecture 200 of the platform developed by the Video Solutions Group. A multi-view capture 202 generates content. Pre-recorded content is encoded, e.g., by a 2D and immersive video encoder 204, and sent to a stream server 206. The content (2D or immersive content) may be played locally and stored on the rendering device for some embodiments.

The streaming server 206 provides pre-recorded 2D and volumetric video content in real-time upon user request. The content is segmented using a DASH packager into 2D or V3C DASH segments 208, 210. The immersive and video decoder platform 212 comprises: a native decoder plugin that decodes content using 2D video codecs (e.g., HEVC); and a host application that renders the scene. The final rendered content 214 is delivered to various devices, including 2D screens, smartphones, tablets, and VR/AR head-mounted displays. Both 2D and volumetric content follow the same architectural path.

MIV is described in *Information Technology - Coded Representation of Immersive Media - Part 12: MPEG Immersive Video,* MPEG-I WG 04 MPEG Video Coding, MPEG 142-Antalya, MDS22686_WG04_N00340, WD 1 of ISO/IEC 23090-12 MPEG Immersive Video 2nd Edition (2023) (*"MDS22686_WG04_N00340"*).

The MPEG MIV format accepts the Multi-View + Depth (MVD), Multi-Plane Images (MPI), and Multi-Spherical Images (MSI) input data representations.

Multi-View + Depth (MVD) includes several views (texture and depth) captured by a camera rig.

Multi-Plane Images (MPI) or Multi-Spherical Images (MSI) represents the scene in layers, or slices, rather than as a set of acquired views with depth. A virtual camera, called an MPI camera, is defined. The closer the user is to the MPI camera, the higher the definition. For MPI, the scene is represented by a succession of planes, with no data behind the camera. MSI uses 360-degree representations and extends MPI to spheres. Slices are successions of spheres. The remainder of the application uses "MPI" to refer to both MPI and MSI.

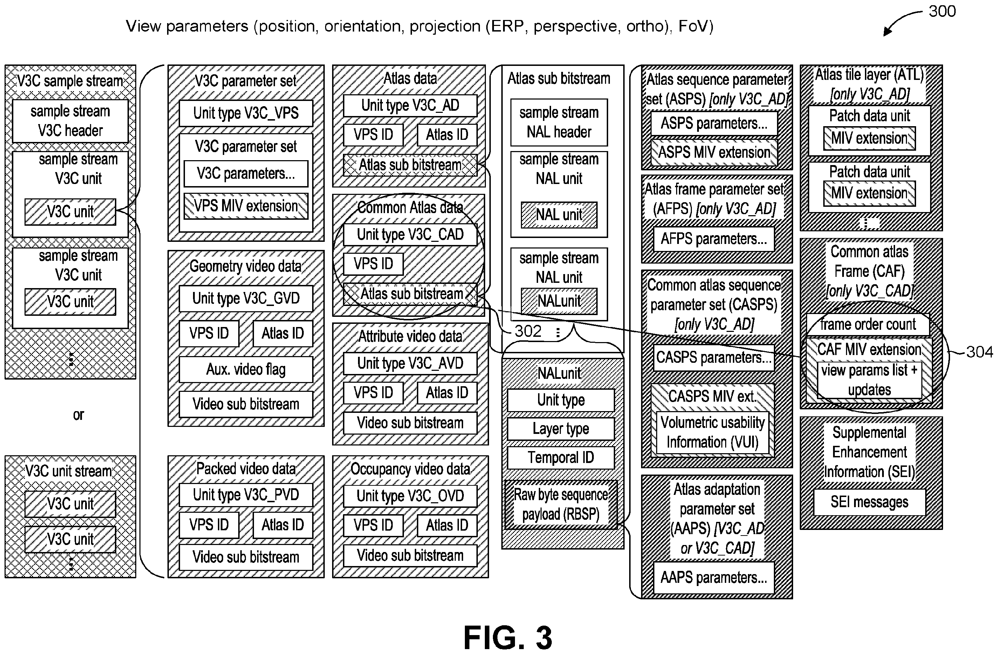

FIG. 3 is a system hierarchy diagram illustrating an example MIV bitstream map in V3C according to some embodiments. The MPEG MIV format has three profiles: (1) main: texture + geometry (MVD); (2) extended: texture + transparency (MPI/MSI) + optional geometry; and (3) geometry absent: texture only.

MIV metadata includes camera parameters and a list of patches. In an MIV bitstream, a dedicated V3C unit, as shown in the example MIV bitstream map 300 of FIG. 3, V3C_CAD (Common Atlas Data 302), carries information common to all atlases in the bitstream. V3C_CAD includes the Atlas Adaptation Parameter Set (AAPS) and the Common Atlas Frame 304 NAL unit.

MIV allows updates to camera- and depth-related parameters within a sequence, which are signaled in the Common Atlas Frame NAL unit. Like the Atlas Sequence Parameter Set (ASPS) and Atlas Frame Parameter Set (AFPS), the AAPS is a non-ACL NAL unit that carries infrequently changing information in the V3C bitstream. These parameter sets have V-PCC and MIV extensions. A non-ACL NAL unit is a non-Atlas Coding Layer Network Adaptation Layer Unit. The Common Atlas Frame Unit 304 (caf_miv_extension() in MIV) contains information related to the camera rig.

The rendering process requires parameters for each view, representing either real (MVD) or virtual (MPI) cameras. For MVD, several cameras are defined but for MPI, a single virtual camera is represented (computed during the MIV generation process). These view parameters, carried in the MIV bitstream, include the projection plane size, projection type, camera intrinsics (specific to the projection type), camera extrinsics, and depth quantization parameters (QPs). Perspective, equirectangular, and orthographic projections are supported.

The intrinsic parameters of a camera define the relationship between a sample position within an image frame and the origin and direction of a ray. The extrinsic parameters represent the camera pose, with the position as a 3D Cartesian coordinate and orientation as a unit quaternion. These extrinsics allow cameras to be located in a common coordinate system, enabling view interpolation from multiple views.

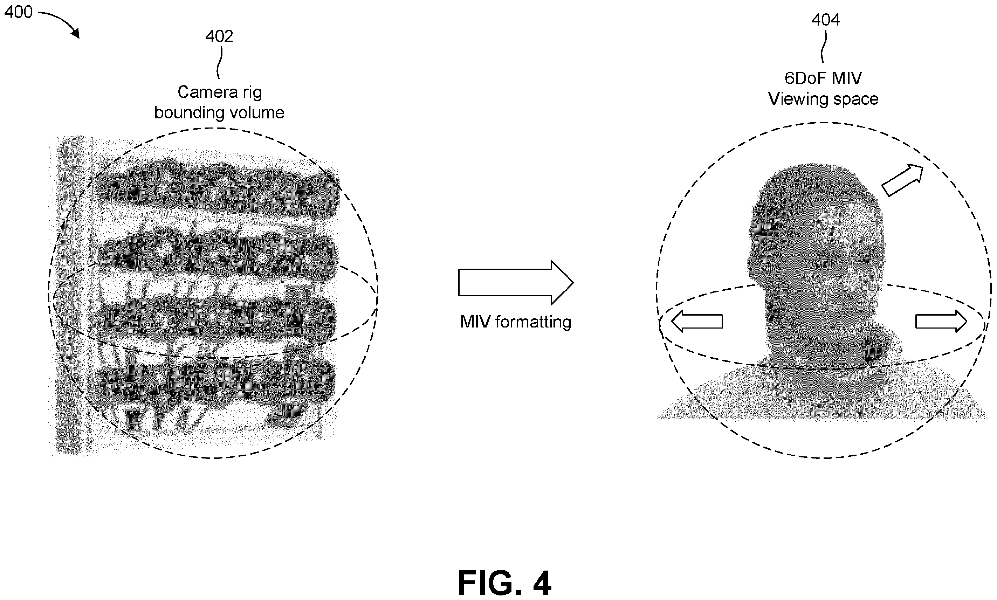

In *MDS22755_WG07_N00592* and *MDS22686_WG04_N00340*, V3C and MIV define three non-mandatory supplemental enhancement information (SEI) messages that may help the rendering: viewport_position(), viewport_camera_parameters(), and viewing_space(). viewport_position() indicates a reference position and orientation in 3D to be rendered. viewport_camera_parameters() enables defining a camera parameter assigned to the viewport. viewing_space() as shown in FIG. 4 is the bounding box of the captured scene where rendering is consistent without significant artifacts. Outside this space, the scene cannot be rendered properly. The viewing space includes the expected viewing box and the field of view.

FIG. 4 is a schematic illustration showing an example camera rig bounding volume versus 6DoF MIV viewing space according to some embodiments. FIG. 4 shows a process 400 in which data collected by a camera rig with a bounding volume 402 undergoes MIV formatting to be rendered in a 6DoF MIV viewing space 404.

During implementation of the Video Solution platform for some embodiments, MIV scenes are synthesized, enabling navigation within the scene using various devices: mouse navigation on a laptop (such as Windows platforms); finger navigation (left/right, up/down) and zoom (two fingers) on smartphones and tablets; gyroscope-based navigation on smartphones and tablets, enabling automatic screen rotation and motion detection; and head movement detection in a head-mounted display with zoom in/out using a remote controller.

The viewport position and viewing space SEI messages are used to fade to black when leaving a viewport position and viewing space. Initially, a default displacement sensitivity was set for navigating within the scenes. However, the introduction of new content, such as BasketBall and InterDigiKart scenes, highlight the need to adapt this displacement sensitivity based on the camera rig configuration during capture for some embodiments.

When content for a scene is captured with a camera rig positioned close to the subject (like InterDigiKart), the sensitivity may be too high, and the displacement may be excessively rapid. This rapid movement may lead to the user quickly reaching the borders of the viewing window, thereby diminishing the sense of immersion and making the experience less enjoyable. The user may feel as though they are being rushed through the scene, unable to fully appreciate the details and nuances of the environment.

Additionally, when the content for a scene is captured with a camera setup that has a wider spacing (like BasketBall), the sensitivity may be too low, and the displacement may be too slow. In such cases, the user may find it tedious and time-consuming to navigate through the scene, expending more effort to move from one point to another. This sluggish movement may detract from the immersive experience, making it difficult for the user to feel fully engaged with the content.

The displacement sensitivity is significantly influenced by the distances between the cameras and the distances from the cameras to the objects within the scene. If not properly adjusted, this displacement sensitivity may result in sharp, jarring movements or overly smooth, bland transitions as the viewport moves between camera positions. To enhance the user experience and maintain a consistent sense of immersion, the displacement sensitivity may be adapted dynamically.

To address these issues, MIV bitstream information, such as detailed camera information or viewing space parameters, may be used. By leveraging this information, the displacement sensitivity may be adjusted in real-time, making the displacement sensitivity specific for each content. For instance, if the cameras are positioned closely, the system may reduce the displacement sensitivity to prevent overly rapid transitions. Similarly, if the cameras are spaced further apart, the system may increase the displacement sensitivity to facilitate smoother and more engaging navigation.

By adapting the displacement sensitivity using MIV bitstream information, a more intuitive and immersive environment may be created for the user, enhancing their overall experience and allowing them to engage more deeply with the content.

In MIV, caf_miv_extension is mandatory information for some embodiments that contains information about the camera. The list of MIV view parameters (miv_view_params list) includes the following information: a list of camera intrasincs (such as ci_cam_type, ci_perspective_focal_hor, and ci_perspective_focal_ver), a list of camera extrinsics, and, for some embodiments, a depth_quantization() of $1/Z$ if law=0 , which includes the depth quantization values of dq_norm disp low and dq_norm_disp_high. Camera intrasincs are intrasinc camera parameters that are internal characteristics for each camera. For example, intrasinc parameters may include focal length. The camera intrasincs ci_perspective_focal_hor and ci_perspective_focal_ver correspond to the focal lengths of the camera. For a camera with rectangular pixels, there are two separate focal lengths: horizontal focal length and vertical focal length. The arrays ci_perspective_focal_hor[v] and ci_perspective_focal_ver[v] are floating-point values that specify (in luma sample position units) the horizontal and vertical components, respectively, of the focal length of a perspective projection. A larger focal length corresponds to a narrower field of view, while a smaller focal length corresponds to a wider field of view, which may be called $f_h$ and $f_v$, respectively. Depth_quantization is defined in *MDS22686_WG04_N00340*, section 8.3.2.6.8, which defines the depth quantization for cameras. The "law" flag is a flag in the MIV bitstream (dq_quantization law) and specifies the type of depth quantization method of the view. If law = 0, a uniform quantization of the inverse of depth values is specified. If law = 2, a piecewise linear quantization of the inverse of depth values is specified. In MIV profiles, the law flag is set to 0. The depth quantization values dq norm disp_low and dq_norm_disp_high define the depth range within which the camera may capture objects, which may be called *Zmin* and *Zmax*, respectively.

An equation relating dimensions of an object in a scene to its projected dimensions on an image plane is given by Eq. 1:

$$x = X . \frac{f_h}{Z} \qquad (1)$$

where x is the coordinate of the projected object on the horizontal axis of the image. X is the real-world coordinate of the object. Z is the distance of the object to the camera. $f_h$ is the horizontal focal length of the camera.

The motion sensitivity (which is equal to the perceived movement change by the camera) may be calculated by differentiating this relationship, as shown in Eqns. 2 and 3:

$$dx = \frac{d}{dz} \left( X . \frac{f_h}{Z} \right) dZ \qquad (2)$$

$$\frac{dx}{dZ} = - X . \frac{f_h}{Z^2} \qquad (3)$$

The negative sign indicates that when the object is closer to the camera (which means when Z decreases), x increases. The motion sensitivity is the change in the position on the image plane for a distance Z as shown in Eq. 4:

$$Sh = \left| \frac{dx}{dZ} \right| \qquad (4)$$

The motion sensitivity in horizontal *Sh* may be computed by Eq. 5:

$$Sh = x . \frac{f_h}{Z^2} \qquad (5)$$

where x is the real-world coordinate of the object in horizontal. Z is the distance of the object to the camera. $f_h$ is the horizontal focal length of the camera.

For the vertical coordinate, a similar equation may apply. The motion sensitivity in vertical *Sv* may be computed from Eq. 6:

$$Sv = y . \frac{f_v}{Z^2} \qquad (6)$$

where *y* is the real-world coordinate of the object in vertical. Z is the distance of the object to the camera. $f_v$ is the horizontal focal length of the camera.

For the depth coordinate, the motion sensitivity in depth *Sz* may be computed from Eq. 7:

$$Sz = z . \frac{f_v}{Z^2} \qquad (7)$$

where z is the real-world coordinate of the object in depth. Z is the distance of the object to the camera. $f_v$ is the horizontal focal length of the camera.

For a range of distance from *Zmin* to *Zmax*, the range of sensitivity may be determined as shown below. At Z = *Zmin*, the range sensitivity may be determined as shown in Eqns. 8 to 10:

$$Sh\,(min) = x.\frac{f_h}{Zmin^2} \qquad (8)$$

$$Sv\,(min) = y.\frac{f_v}{Zmin^2} \qquad (9)$$

$$Sz\,(min) = z.\frac{f_v}{Zmin^2} \qquad (10)$$

At Z = *Zmax*, the range sensitivity may be determined as shown in Eqns. 11 to 13:

$$Sh\,(max) = x.\frac{f_h}{Zmax^2} \qquad (11)$$

$$Sv\,(max) = y.\frac{f_v}{Zmax^2} \qquad (12)$$

$$Sz\,(max) = z.\frac{f_v}{Zmax^2} \qquad (13)$$

The motion sensitivity changes based on the object's distance from the camera. The motion sensitivity is higher (more sensitive) when the object is closer to the camera (at *Zmin*) and lower (less sensitive) when the object is farther away (at *Zmax*).

The mean (horizontal, vertical, and depth) sensitivity of the scene may be computed as a harmonic mean. For some embodiments, the advantage of the harmonic mean is to influence inversely the sensitivity and give more weights to small values (objects close to the camera) as shown in Eqns. 14 to 16:

$$Sh\,(mean) = \frac{2}{\frac{1}{sh(\text{min})}+\frac{1}{sh(\text{max})}} \qquad (14)$$

$$Sv\,(mean) = \frac{2}{\frac{1}{sv(\text{min})}+\frac{1}{sv(\text{max})}} \qquad (15)$$

$$Sz\,(mean) = \frac{2}{\frac{1}{sz(\text{min})}+\frac{1}{sz(\text{max})}} \qquad (16)$$

A global sensitivity *S* (*mean*) is computed by combining vertical and horizontal mean sensitivity as shown in Eq. 17:

$$S\,(mean) = \frac{2}{\frac{1}{Sh(\text{mean})}+\frac{1}{Sv(mean)}+\frac{1}{Sz(mean)}} \qquad (17)$$

The global sensitivity *S* (*mean*) may be directly applied to the rendering process when moving around the scene. This ensures that the visual representation remains consistent and accurate. In multi-camera scenarios involving multi-view + depth (MVD), sensitivity calculations are performed independently for each camera. This approach allows each camera to consider its unique perspective and environmental conditions. To obtain a unified overall sensitivity value, the individual sensitivities of all cameras are combined. The combination may use a harmonic averaging, which provides a balanced representation of the sensitivities, ensuring that the final rendering accurately reflects the variations captured by the different cameras. This method improves overall visual fidelity and image quality.

Here, the sensitivity is computed with a harmonic mean, but the sensitivity may be computed by arithmetic mean or a weighted mean. In MVD scenarios where several cameras (numbered 1 to N) may be used, the sensitivity may be computed as shown below. The sensitivity may be computed as an average of global sensitivity computed for all cameras as shown in Eq. 18:

$$S\ (mean) = \sum_{i=1}^{N} \frac{S_i(mean)}{N} \qquad (18)$$

The sensitivity computation may use minimum/maximum information of each camera of the camera rig as shown in Eqns. 19 to 22:

$$Zmax = \min_{N}\ (Zmax_i) \qquad (19)$$

$$Zmin = \max_{N}\ (Zmin_i) \qquad (20)$$

$$f_h = \max_{N}\ (f_{h_i}) \qquad (21)$$

$$f_v = \max_{N}\ (f_{v_i}) \qquad (22)$$

A mechanism in MIV exists to update all camera information per group of pictures (GOP) (typically, 32 frames), which means that the global sensitivity also may be adjusted accordingly at any update in the bitstream, all along the sequence. In video coding, GOP specifies the order in which intra- and inter-frames are arranged. A GOP is a collection of pictures within a coded video stream. A video stream contains several GOPs. GOPs are independent of one another, which means that, for some embodiments, a decoder needs the previous GOP to decode the next GOP(s).

Some embodiments use the MPEG Immersive Video standard (*MDS22686_WG04_N00340*) to compute sensitivity. An SEI message is defined for MPI content. This message is described in the standard as shown below. Table 1 lists some top-level shape components associated with a viewing space for the payload portion of an SEI message. A viewing space is constructed based on a list of elementary shapes, which are based on a list of primitive shapes.

**Table 1.**

| Code | Descriptor |
|---|---|
| viewing_space(payloadSize) { | |
|   vs_num_elementary_shapesminus1 | ue(v) |
|   for (e=0; e<=vs_num_elementary_shapes_minus1; e++) { | |
|     vs_elementary_shape_operation[e] | u(2) |
|     elementary_shape (e) | |
|   } | |
| } | |

Table 2 lists some elementary shape syntax fields associated with a viewing space for the payload portion of an SEI message.

**Table 2.**

| Code | Descriptor |
|---|---|
| elementary_shape(e) { | |
|   es_num_primitive_shapes_minus1[e] | u(8) |
|   es_primitive_shape_operation[e] | u(2) |
|   es_guard_band_present_flag[e] | u(1) |
|   es_primitive_orientation_present_flag[e] | u(1) |
|   es_viewing_direction_constraint_present_flag[e] | u(1) |
|   es_camera_inferred_flag[e] | u(1) |
|   for (s=0; s<=es_num_primitive_shapes_minus1[e]; s++) { | |

(continued)

| Code | Descriptor |
|---|---|
| if (es_camera_inferred_flag[e]) | |
| es_view_idx [e][s] | u(16) |
| es_primitive_shape_type[e][s] | u(2) |
| if (es_primitive_shape_type[e][s] == 0) | |
| cuboid_primitive(e, s) | |
| else if (es_primitive_shape_type[e][s] == 1) | |
| spheroid_primitive(e, s) | |
| else if (es_primitive_shape_type[e][s] == 2) | |
| halfspace_primitive(e, s) | |
| if (es_guard_band_present_flag[e]) | |
| es_guard_band_size[e][s] | fl(16) |
| if (es_primitive_orientation_present_flag[e]) { | |
| if (!es_camera_inferred_flag[e]) { | |
| es_primitive_shape_quat_x[e][s] | i(16) |
| es_primitive_shape_quat_y[e][s] | i(16) |
| es_primitive_shape_quat_z[e][s] | i(16) |
| } | |
| } | |
| if (es_viewing_direction_constraint_present_flag[e]) { | |
| if (es_guard_band_present_flag[e]) | |
| es_guard_band_direction_size[e][s] | fl(16) |
| if (!es_camera_inferred_flag[e]) { | |
| es_primitive_shape_viewing_direction_quat_x_center[e][s] | i(16) |
| es_primitive_shape_viewing_direction_quat_y_center[e][s] | i(16) |
| es_primitive_shape_viewing_direction_quat_z_center[e][s] | i(16) |
| } | |
| es_primitive_shape_viewing_direction_yaw_range[e][s] | fl(16) |
| es_primitive_shape_viewing_direction_pitch_range[e][s] | fl(16) |
| } | |
| } | |
| } | |

Table 3 lists some cuboid primitive shape syntax fields associated with a viewing space for the payload portion of an SEI message. The cuboid_primitive(e, s) definition in Table 3 corresponds to the cuboid primitive reference made in Table 2.

**Table 3.**

| Code | Descriptor |
|---|---|
| cuboid_primitive(e, s) { | |
| if (!es_camera_inferred_flag[e]) { | |
| cp_center_x[e][s] | fl(16) |

(continued)

| Code | Descriptor |
|---|---|
| cp_center_y[e][s] | fl(16) |
| cp_center_z[e][s] | fl(16) |
| } | |
| cp_size_x[e][s] | fl(16) |
| cp_size_y[e][s] | fl(16) |
| cp_size_z[e][s] | fl(16) |
| } | |

Table 4 lists some spheroid primitive shape syntax fields associated with a viewing space for the payload portion of an SEI message. The spheroid_primitive(e, s) definition in Table 4 corresponds to the spheroid primitive reference made in Table 2.

**Table 4.**

| Code | Descriptor |
|---|---|
| spheroid_primitive(e, s) { | |
| if (!es_camera_inferred_flag[e]) { | |
| sp_center_x[e][s] | fl(16) |
| sp_center_y[e][s] | fl(16) |
| sp_center_z[e][s] | fl(16) |
| } | |
| sp_radius_x[e][s] | fl(16) |
| sp_radius_y[e][s] | fl(16) |
| sp_radius_z[e][s] | fl(16) |
| } | |

Table 5 lists some half space primitive shape syntax fields associated with a viewing space for the payload portion of an SEI message. The halfspace_primitive(e, s) definition in Table 5 corresponds to the halfspace primitive reference made in Table 2.

**Table 5.**

| Code | Descriptor |
|---|---|
| halfspace_primitive(e, s) { | |
| hp_normal_x[e][s] | fl(16) |
| hp_normal_y[e][s] | fl(16) |
| hp_normal_z[e][s] | fl(16) |
| hp_distance[e][s] | fl(16) |
| } | |

## Computation of a Constant Sensitivity

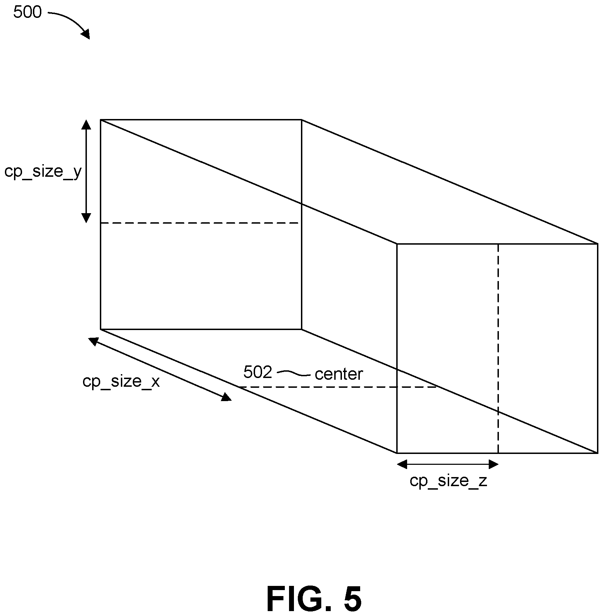

FIG. 5 is a schematic illustration showing an example cuboid representation according to some embodiments. If the SEI message is present in the stream, a computation of the sensitivity may be done using the provided values. The most common message is a cuboid size, representing half the dimension of the cube. The sensitivity is computed with only the viewing space. See Table 3 regarding the cuboid_primitive(e, s) data structure.

FIG. 5 shows a cuboid representation 500 with a center line 502. Regarding FIG. 5, the sensitivity may be computed as shown in Eqns. 23 to 25:

$$Sh = upp_x * 2 * \text{cp\_size\_x} \tag{23}$$

$$Sv = upp_y * 2 * \text{cp\_size\_y} \tag{24}$$

$$Sz = upp_z * 2 * \text{cp\_size\_z} \tag{25}$$

where $upp_k$ (Units Per Pixel) is a constant coefficient used to compute the desired conversion between the movement on screen (in pixels) and the movement in the content, where $k$ corresponds to the $x$, $y$, or $z$ axes. Distinct movements may be done using a finger, a mouse, or any other movements since head displacements may be used. Mouse movements may be much more precise, so the displacement is slower than movements done with a finger, for instance. An empirical method was used to determine displacement values: 0.02 units per pixel for fingers and 0.002 units per pixel for a mouse. When content is generated, a Boolean field exists to specify whether the units are in meters or not. Therefore, the units may not be able to be deduced at rendering time. $upp_x$, $upp_y$, $upp_z$ may be distinct or the same in all axes and may be adjusted following the expected user experience.

By analogy, the sensitivity may be computed for a spheroid as shown in Eqns. 26 to 28:

$$Sh = upp_x * 2 * \text{sp\_radius\_x} \tag{26}$$

$$Sv = upp_y * 2 * \text{sp\_radius\_y} \tag{27}$$

$$Sz = upp_z * 2 * \text{sp\_radius\_z} \tag{28}$$

**Computation of an Adaptative Sensitivity**

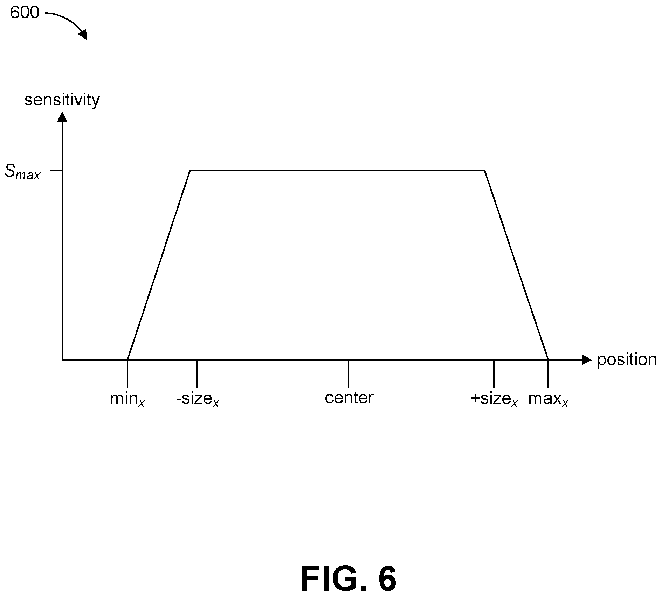

FIG. 6 is a graph illustrating an example adaptative sensitivity according to position according to some embodiments. The sensitivity may be adapted depending on the place the user is in the content. This means that $upp_k$ is not a constant anymore but is represented as a function depending on the position in the scene. For instance, as shown in the example graph 600, the sensitivity may be decreased going further than the center point and increased going closer to the center view as shown in FIG. 6.

In that case, the maximum sensitivity is reached in the range [-$size_x$; +$size_x$] and the sensitivity decreases until 0 before and after the range. The sensitivity may be determined as shown in Eqns. 29 to 31:

$$Sh = f_x * 2 * \text{cp\_size\_x} \tag{29}$$

$$Sv = f_y * 2 * \text{cp\_size\_y} \tag{30}$$

$$Sz = f_z * 2 * \text{cp\_size\_z} \tag{31}$$

in which $f_k$ is a function defined by Eq. 32:

$$f_k = \begin{cases} coef_k * position + sensitivity & when\ position \in [min_k; -size_k] \\ S_{max} & when\ position \in [-size_k; +size_k] \\ -coef_k * position + sensitivity & when\ position \in [+size_k; max_k] \end{cases} \tag{32}$$

with subscript $k$ being $x$, $y$, or $z$ and with $coef_k$ being a constant coefficient defined by Eq. 33:

$$coef_k = \frac{S_{max}}{(max_k - size_k)} \qquad (33)$$

with the user setting $min_k$ and $max_k$. As such, these equations imply for some embodiments that $max_k = -min_k$.

For some embodiments, the slopes for the positions before $-min_k$ and after $max_k$ may be used to calculate a theorical value (never reached) using Eq. 34:

$$f_k = \begin{cases} (coef_k * position) - (coef_k * min_k) & when\ position\ \in\ [min_k; -size_k] \\ S_{max} & when\ position\ \in\ [-size_k; +size_k] \\ (-coef_k * position) + (coef_k * max_k) & when\ position\ \in\ [+size_k; max_k] \end{cases} \quad (34)$$

Many different curves and behaviors may be done to adapt the sensitivity. This one is just an example.

This application may improve the user experience by adapting the displacement sensitivity within the scene. Such an adjustment may give the user a better feeling of immersion into the content for some embodiments. The functionality described in this application may be used by a V3C immersive platform and deployed on a 5GMag GitHub. For some embodiments, the displacement is adapted to the content. For some embodiments, the displacement is adapted if the viewing space SEI is removed or modified. For some embodiments, the displacement is adapted if the parameter caf_miv_extension in a bitstream is modified, resulting in different camera information.

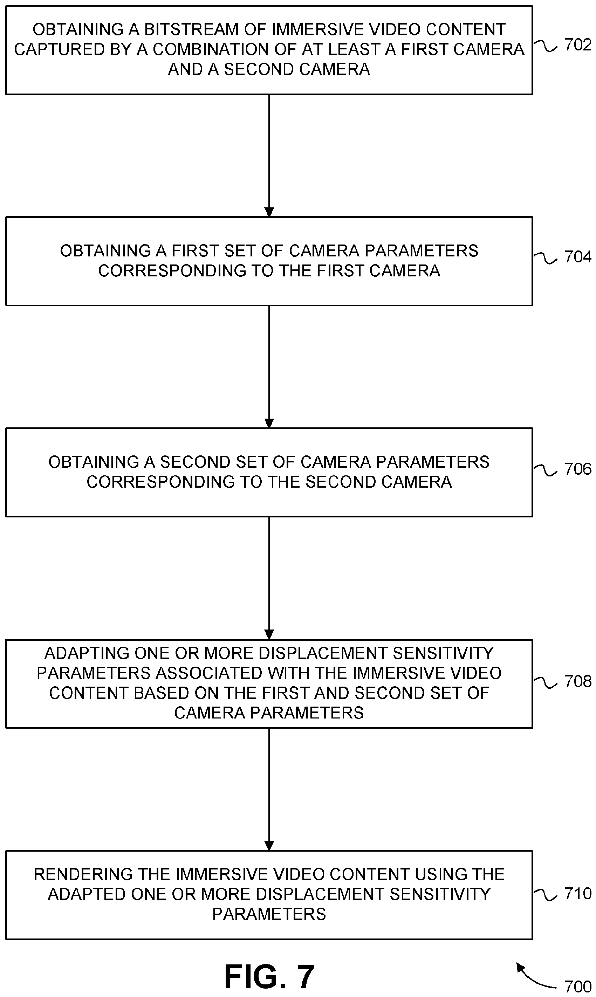

FIG. 7 is a flowchart illustrating an example adaptive sensitivity process according to some embodiments. For some embodiments, an example process 700 may include obtaining 702 a bitstream of immersive video content captured by a combination of at least a first camera and a second camera. For some embodiments, the example process 700 may further include obtaining 704 a first set of camera parameters corresponding to the first camera. For some embodiments, the example process 700 may further include obtaining 706 a second set of camera parameters corresponding to the second camera. For some embodiments, the example process 700 may further include adapting 708 one or more displacement sensitivity parameters associated with the immersive video content based on the first and second set of camera parameters. For some embodiments, the example process 700 may further include rendering 710 the immersive video content using the adapted one or more displacement sensitivity parameters.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: obtaining a bitstream of immersive video content captured by a combination of at least a first camera and a second camera; obtaining a first set of camera parameters corresponding to the first camera; obtaining a second set of camera parameters corresponding to the second camera; adapting one or more displacement sensitivity parameters associated with the immersive video content based on the first and second set of camera parameters; and rendering the immersive video content using the adapted one or more displacement sensitivity parameters.

For some embodiments of the example method, the first and second set of camera parameters include one or more parameters associated with motion.

Some embodiments of the example method may further include detecting a user interface action indicating a movement to be exhibited in rendering of the content, wherein adapting one or more displacement sensitivity parameters is further performed based on the detected user interface action.

Some embodiments of the example method may further include detecting a movement of a user relative to content rendered in an immersive environment, wherein adapting one or more displacement sensitivity parameters is further performed based on the detected movement of the user.

Some embodiments of the example method may further include: detecting a second movement of a user relative to content rendered in an immersive environment; and adapting at least one of the one or more displacement sensitivity parameters based on the detected second movement of the user.

For some embodiments of the example method, adapting the one or more displacement sensitivity parameters is performed based on the immersive video content.

For some embodiments of the example method, adapting the one or more displacement sensitivity parameters is performed based on a shape of an object present in the immersive video content.

Some embodiments of the example method may further include obtaining a second bitstream of a second immersive video content, wherein adapting one or more displacement sensitivity parameters is further performed based on the second immersive video content, and wherein the second immersive video content is different than the immersive video content obtained first.

For some embodiments of the example method, adapting one or more displacement sensitivity parameters associated with the immersive video content is based on distance between the first and second cameras.

For some embodiments of the example method, adapting one or more displacement sensitivity parameters associated with the immersive video content is based on distance between the first camera and an object captured in the immersive video content.

For some embodiments of the example method, adapting one or more displacement sensitivity parameters associated with the immersive video content includes adapting one or more displacement sensitivity parameters associated with the immersive video content for an object captured in the immersive video content when a distance between the object and the first camera is within a threshold range.

For some embodiments of the example method, adapting one or more displacement sensitivity parameters associated with the immersive video content includes setting each of the one or more displacement sensitivity parameters to a harmonic mean of the respective one or more displacement sensitivity parameters.

For some embodiments of the example method, adapting one or more displacement sensitivity parameters associated with the immersive video content includes: obtaining, for each of the one or more displacement sensitivity parameters, a respective global value to be used for more than one coordinate axis; and setting each of the one or more displacement sensitivity parameters to the respective global value.

For some embodiments of the example method, obtaining the first set of camera parameters includes receiving a first set of one or more supplemental enhancement information (SEI) messages, and obtaining the second set of camera parameters includes receiving a second set of one or more supplemental enhancement information (SEI) messages.

An example apparatus in accordance with some embodiments may include: a processor; and a memory storing instructions operative, when executed by the processor, to cause the apparatus to perform the method of any one of the methods listed above.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

**Claims**

1.   A method comprising:

   obtaining a bitstream of immersive video content captured by a combination of at least a first camera and a second camera;
   obtaining a first set of camera parameters corresponding to the first camera;
   obtaining a second set of camera parameters corresponding to the second camera;
   adapting one or more displacement sensitivity parameters associated with the immersive video content based on the first and second set of camera parameters; and
   rendering the immersive video content using the adapted one or more displacement sensitivity parameters.

2.   The method of claim 1, wherein the first and second set of camera parameters comprise one or more parameters associated with motion.

3.   The method of any one of claims 1-2, further comprising:

   detecting a user interface action indicating a movement to be exhibited in rendering of the content,
   wherein adapting one or more displacement sensitivity parameters is further performed based on the detected user interface action.

4.   The method of any one of claims 1-3, further comprising:

   detecting a movement of a user relative to content rendered in an immersive environment,
   wherein adapting one or more displacement sensitivity parameters is further performed based on the detected movement of the user.

5.   The method of claim 4, further comprising:

detecting a second movement of a user relative to content rendered in an immersive environment; and
adapting at least one of the one or more displacement sensitivity parameters based on the detected second movement of the user.

6.  The method of any one of claims 1-5, wherein adapting the one or more displacement sensitivity parameters is performed based on the immersive video content.

7.  The method of claim 6, wherein adapting the one or more displacement sensitivity parameters is performed based on a shape of an object present in the immersive video content.

8.  The method of any one of claims 1-7, further comprising:

    obtaining a second bitstream of a second immersive video content,
    wherein adapting one or more displacement sensitivity parameters is further performed based on the second immersive video content, and
    wherein the second immersive video content is different than the immersive video content obtained first.

9.  The method of claims 1-8, wherein adapting one or more displacement sensitivity parameters associated with the immersive video content is based on distance between the first and second cameras.

10. The method of claims 1-9, wherein adapting one or more displacement sensitivity parameters associated with the immersive video content is based on distance between the first camera and an object captured in the immersive video content.

11. The method of claims 1-9, wherein adapting one or more displacement sensitivity parameters associated with the immersive video content comprises adapting one or more displacement sensitivity parameters associated with the immersive video content for an object captured in the immersive video content when a distance between the object and the first camera is within a threshold range.

12. The method of claims 1-9, wherein adapting one or more displacement sensitivity parameters associated with the immersive video content comprises setting each of the one or more displacement sensitivity parameters to a harmonic mean of the respective one or more displacement sensitivity parameters.

13. The method of claims 1-9, wherein adapting one or more displacement sensitivity parameters associated with the immersive video content comprises:

    obtaining, for each of the one or more displacement sensitivity parameters, a respective global value to be used for more than one coordinate axis; and
    setting each of the one or more displacement sensitivity parameters to the respective global value.

14. The method of claims 1-13,

    wherein obtaining the first set of camera parameters comprises receiving a first set of one or more supplemental enhancement information (SEI) messages, and
    wherein obtaining the second set of camera parameters comprises receiving a second set of one or more supplemental enhancement information (SEI) messages.

15. An apparatus comprising:

    a processor; and
    a memory storing instructions operative, when executed by the processor, to cause the apparatus to perform the method of any one of claims 1 through 14.

**FIG. 1**

EP 4 746 417 A1

202

Multi-view Capture

204

2D and Immersive
Video Encoder

MPEG V3C V.PCC
MPEG V3C MIV
MPEG HEVC / VVC

Pre-recorded content

206

DASH
Packager

HTTP
Server

DASH Server

206 — Streaming Server

MPEG V3C System
ISOBMFF MPEG-
DASH

208

2D or V3C
DASH segment

200

Windows and
Android end-
devices with Unity
applications

210

2D or V3C DASH
segment

Media request

DASH
Client

Demuxer

2D Video
Decoder(s)

Synthesizers

| 2D | V-PCC | MIV |

Haptics

Native Decoder Plugin

Viewport
information

Full scene
renderer

Host
Application

Color +
Depth
Textures

214

Final
Render

212 — Immersive Video Decoder Platform

# FIG. 2

View parameters (position, orientation, projection (ERP, perspective, ortho), FoV)

**V3C sample stream**
- sample stream V3C header
- sample stream V3C unit
  - V3C unit
- sample stream V3C unit
  - V3C unit

or

**V3C unit stream**
- V3C unit
- V3C unit

**V3C parameter set**
- Unit type V3C_VPS
- V3C parameter set
  - V3C parameters...
  - VPS MIV extension

**Geometry video data**
- Unit type V3C_GVD
- VPS ID | Atlas ID
- Aux. video flag
- Video sub bitstream

**Packed video data**
- Unit type V3C_PVD
- VPS ID | Atlas ID
- Video sub bitstream

**Atlas data**
- Unit type V3C_AD
- VPS ID | Atlas ID
- Atlas sub bitstream

**Common Atlas data**
- Unit type V3C_CAD
- VPS ID
- Atlas sub bitstream

**Attribute video data**
- Unit type V3C_AVD
- VPS ID | Atlas ID
- Video sub bitstream

**Occupancy video data**
- Unit type V3C_OVD
- VPS ID | Atlas ID
- Video sub bitstream

**Atlas sub bitstream**
- sample stream NAL header
- sample stream NAL unit
  - NAL unit
- sample stream NAL unit
  - NALunit

302

**NALunit**
- Unit type
- Layer type
- Temporal ID
- Raw byte sequence payload (RBSP)

**Atlas sequence parameter set (ASPS)** *[only V3C_AD]*
- ASPS parameters...
- ASPS MIV extension

**Atlas frame parameter set (AFPS)** *[only V3C_AD]*
- AFPS parameters...

**Common atlas sequence parameter set (CASPS)** *[only V3C_AD]*
- CASPS parameters...
- CASPS MIV ext.
- Volumetric usability Information (VUI)

**Atlas adaptation parameter set (AAPS)** *[V3C_AD or V3C_CAD]*
- AAPS parameters...

**Atlas tile layer (ATL)** *[only V3C_AD]*
- Patch data unit
  - MIV extension
- Patch data unit
  - MIV extension

**Common atlas Frame (CAF)** *[only V3C_CAD]*
- frame order count
- CAF MIV extension
  - view params list + updates

304

**Supplemental Enhancement Information (SEI)**
- SEI messages

300

**FIG. 3**

EP 4 746 417 A1

**FIG. 4**

EP 4 746 417 A1

FIG. 5

FIG. 6

OBTAINING A BITSTREAM OF IMMERSIVE VIDEO CONTENT CAPTURED BY A COMBINATION OF AT LEAST A FIRST CAMERA AND A SECOND CAMERA ⟶ 702

OBTAINING A FIRST SET OF CAMERA PARAMETERS CORRESPONDING TO THE FIRST CAMERA ⟶ 704

OBTAINING A SECOND SET OF CAMERA PARAMETERS CORRESPONDING TO THE SECOND CAMERA ⟶ 706

ADAPTING ONE OR MORE DISPLACEMENT SENSITIVITY PARAMETERS ASSOCIATED WITH THE IMMERSIVE VIDEO CONTENT BASED ON THE FIRST AND SECOND SET OF CAMERA PARAMETERS ⟶ 708

RENDERING THE IMMERSIVE VIDEO CONTENT USING THE ADAPTED ONE OR MORE DISPLACEMENT SENSITIVITY PARAMETERS ⟶ 710

# FIG. 7

⟶ 700

Europäisches
Patentamt

European
Patent Office

Office européen
des brevets

# EUROPEAN SEARCH REPORT

**Application Number**

EP 24 30 6911

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/387128 A1 (BAIL JEFFREY [US] ET AL) 8 December 2022 (2022-12-08) * paragraphs [0057], [0060], [0086], [0098] - [0100] *<br>----- | 1-15 | INV.<br>H04N21/218 |
| A | US 2019/018567 A1 (MURPHY PADRAIG [IE] ET AL) 17 January 2019 (2019-01-17) * paragraphs [0010], [0042], [0126] *<br>----- | 6-8, 10-14 | |

**TECHNICAL FIELDS
SEARCHED      (IPC)**

H04N
G06F

The present search report has been drawn up for all claims

| Place of search | Date of completion of the search | Examiner |
|---|---|---|
| The Hague | 23 April 2025 | Borcea, Veronica |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...................................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 30 6911

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2025

| Patent document cited in search report | Publication date | Patent family member(s) | Publication date |
|---|---|---|---|
| US 2022387128 A1 | 08-12-2022 | CA 3152108 A1 | 14-05-2021 |
| | | CN 114641251 A | 17-06-2022 |
| | | EP 4031050 A1 | 27-07-2022 |
| | | JP 2023500053 A | 04-01-2023 |
| | | US 2022387128 A1 | 08-12-2022 |
| | | WO 2021092194 A1 | 14-05-2021 |
| US 2019018567 A1 | 17-01-2019 | US 2019018567 A1 | 17-01-2019 |
| | | US 2020409532 A1 | 31-12-2020 |

For more details about this annex : see Official Journal of the European Patent Office, No. 12/82